# EUROPEAN PATENT APPLICATION

(11) **EP 4 406 401 A1**
(43) Date of publication of application: **31.07.2024**
(21) Application number: 24153993.1
(22) Date of filing: 25.01.2024
(51) Int. Cl.: A01F 15/07

(54) **A BALER**

(30) Priority: 26.01.2023 IE S20230010
(71) Applicant: McHale Engineering Unlimited Company, Ballinrobe, County Mayo (IE)
(72) Inventor: McHALE, Padraic, Christopher, Tumneenane, Clonbur, County Galway, (IE); McHALE, Martin, William, Kilmaine Village, Kilmaine, County Mayo, (IE); McHALE, Paul, Gerard, 13 Riverside, Woodquay, Galway, (IE); BIGGINS, John, Patrick, 30 Hillcrest, Claremorris, County Mayo, (IE); WARREN, John, Alexander, Coolylaughnan, Hollymount, County Mayo, (IE); SHANAHAN, Conor, Paul, Claggan, Ballycroy, Westport, County Mayo, (IE)
(74) Representative: Gorman, Francis Fergus

(57) **Abstract**

A feeding system for feeding wrapping material (26) into a bale chamber (15) of a fixed chamber roller baler (1) for circumferentially wrapping a round bale therein whereby the wrapping material (26) is fed from a roll (25) thereof through primary feed and pinch rollers (30, 31). The wrapping material (26) is drawn from the roll (25) by the primary feed and pinch rollers (30, 31) through a tensioning system (50) comprising spaced apart parallel non-rotatable first and second tensioning shafts (51, 53) of circular transverse cross-section. The first tensioning shaft (51) is carried on a pair of carrier members (55) pivotal about a pivot axis (57) defined by the second tensioning shaft (53) for adjusting the degree of tension induced in the wrapping material by the tensioning system (50). By pivoting the first tensioning shaft (51) in the direction of the arrow C about the pivot axis (57), the angular distances around the first and second tensioning shafts (51, 53) engaged by the net wrapping material (26) increases, thereby increasing the tension induced in the net wrapping material (26). A secondary feed roller (64) engaging an outer surface (66) of the roll (25) of wrapping material (26) rotates the roll (25) to simultaneously dispense wrapping material (26) therefrom when the primary feed roller (30) is operating to feed the wrapping material (26) into the bale chamber (15) to reduce tension induced in the wrapping material (26) by the tensioning system (50).

## Description

The present invention relates to a baler, and in particular, to a baler of the type for producing a relatively large cylindrical bale, commonly referred to as a round bale of, for example, crop material, and the invention also relates to a feeding system for feeding binding material during circumferential binding of a formed bale in the baler. The invention also relates to a method for feeding binding material from a roll thereof into a baler for circumferentially binding a bale in the baler.

Such round bales, are typically of diameter in the range of 500mm to 2000mm, and of axial length commonly in the range of 1100mm to 1300mm. More typically, the diameter of such round bales lies in the range of 700mm to 1300mm, while the axial length of such round bales typically lies in the range of 1200mm to 1250mm.

In baling crop material, and indeed, in baling any material in such a baler of the type for producing a round bale, it is important that the crop or other material when formed into a round bale in a bale chamber of the baler is circumferentially secured in order to prevent the bale when discharged from the bale chamber unravelling. In general, such bales are circumferentially secured in the bale chamber by circumferentially binding the bale therein. Circumferential binding of the bale may be carried out using net wrapping material or sheet film plastics material, and in some cases, by circumferentially binding the formed bale by twine wrapped circumferentially around the bale. However, it is important irrespective of the binding material that the binding material should be tightly wrapped circumferentially around the bale, and this is particularly so, in the case of a bale being circumferentially wrapped by net wrapping material or sheet film material. In order that the wrapping material is tightly wrapped around the circumference of the bale, the wrapping material being fed from a roll thereof must be tensioned as it is being drawn into the bale chamber. In general, the tensioning of wrapping material in known tensioning systems is carried out by applying a tensioning force to the wrapping material, which is applied generally by restricting the rate at which the wrapping material may be drawn from the roll thereof.

However, such tensioning systems present problems during initial feeding of the wrapping material into the bale chamber. In general, on completion of the formation of a bale in the bale chamber of a baler, wrapping material is fed into the bale chamber, typically, by a feed roller and a cooperating pinch roller. However, if the tension applied to the wrapping material is too great, the feed roller is unable to draw the wrapping material from the roll thereof, and thereby, it is impossible to feed the wrapping material into the bale chamber. This, thus, limits the tension which may be applied to the wrapping material during circumferential wrapping of the bale in the bale chamber of a baler. Thus, in general, in known systems for feeding wrapping material into a bale chamber of a baler, the degree of tightness to which the bale may be circumferentially wrapped is limited. This results in a number of disadvantages, firstly, irrespective of the material being baled, the diameter of the bale in general is larger than could otherwise be achieved if the bale were more tightly circumferentially wrapped, which presents difficulties in storing and transporting such bales. A second and particularly important disadvantage arises in the case of baled silage where anaerobic fermentation of the silage may be compromised. It is known that the tighter a bale is wrapped, the more oxygen is dispelled from the bale which in turn aids in the anaerobic fermentation of the crop material in the wrapped bale. Therefore, if a bale of silage is not sufficiently tightly wrapped circumferentially, the quality of the silage may be poor.

There is therefore a need for a feeding system for feeding binding material into a baler for circumferentially binding a bale therein which addresses this problem.

The present invention is directed towards a feeding system for feeding binding material into a baler for circumferentially binding a bale therein. The invention is also directed towards providing a baler comprising such a feeding system. Additionally, the invention is directed towards providing a method for feeding binding material for circumferentially binding a bale in a baler.

According to the invention there is provided a feeding system for feeding binding material from a roll thereof into a pressing means of a baler for circumferentially binding a formed bale therein, the feeding system comprising a primary feeding means selectively operable in an active mode to feed binding material from a roll thereof into the pressing means to circumferentially bind the bale in the pressing means and a passive mode during which the binding material may be freely drawn through the primary feeding means, a tensioning means for tensioning the binding material, and a tension reducing means for reducing the tension in the binding material while the primary feeding means is operating in the active mode.

In one embodiment of the invention the tension reducing means is responsive to operation of the primary feeding means being operated in the active mode for reducing the tension applied to the binding material by the tensioning means.

In another embodiment of the invention the tensioning means is located between the primary feeding means and the roll of binding material.

In another embodiment of the invention the tension reducing means comprises a secondary feeding means for feeding binding material to the tensioning means to reduce the tension being applied to the binding material by the tensioning means.

Preferably, the secondary feeding means is configured to feed the binding material to the tensioning means at a linear speed greater than the linear speed at which the binding material is fed by the primary feeding means.

In one embodiment of the invention the secondary feeding means is configured to feed the binding material to the tensioning means at a linear speed in the range of 1 % to 5% greater than the linear speed at which the binding material is fed by the primary feeding means.

Advantageously, the secondary feeding means is configured to feed the binding material to the tensioning means at a linear speed in the range of 2% to 4% greater than the linear speed at which the binding material is fed by the primary feeding means.

Ideally, the secondary feeding means is configured to feed the binding material to the tensioning means at a linear speed of approximately 3% greater than the linear speed at which the binding material is fed by the primary feeding means.

In another embodiment of the invention the secondary feeding means is cooperable with the roll of the binding material to rotate the roll to feed the binding material from the roll thereof.

In one embodiment of the invention the secondary feeding means is cooperable with an outer surface of the roll of the binding material to rotate the roll thereof to feed the binding material from the roll.

In another embodiment of the invention the secondary feeding means comprises a secondary feed roller.

In an alternative embodiment of the invention the roll of binding material is carried fast on a spindle, and preferably, the secondary feeding means is configured to rotate the spindle to feed the binding material from the roll thereof.

In one embodiment of the invention the tensioning means comprises a first tensioning element and a second tensioning element, the first tensioning element defining a first surface over which the binding material is passed from the roll of binding material to the second tensioning element, the second tensioning element defining a second surface over which the binding material is passed from the first tensioning element to the primary feeding means, the first and second tensioning elements being located relative to each other to determine the angular distances around which the binding material engages the respective first and second surfaces thereof.

Preferably, the first and second tensioning elements are spaced apart from each other.

In one embodiment of the invention the angular distance around which the binding material extends around the first surface of the first tensioning element during tensioning thereof lies in the range of 120° to 209°, and preferably, in the range of 140° to 209°, and advantageously, in the range of 157° to 209°.

In another embodiment of the invention the angular distance around which the binding material extends around the second surface of the second tensioning element during tensioning thereof lies in the range of 90° to 202°, and preferably, in the range of 100° to 202°, and advantageously, in the range of 120° to 202°.

In another embodiment of the invention the first and second tensioning elements comprise non-rotatably mounted respective first and second shafts. Preferably, the first and second shafts are of at least partly circular transverse cross-section defining the corresponding first and second surfaces. Preferably, the first and second shafts extend parallel to each other.

In another embodiment of the invention the first and second shafts of the first and second tensioning elements comprise respective shafts of substantially circular transverse cross-section.

In one embodiment of the invention the tension applied to the binding material by the tensioning means is selectable, and preferably, the tensioning means is adapted for adjusting the tension applied to the binding material.

In another embodiment of the invention one of the first and second tensioning elements is moveable relative to the other one thereof for varying the tension applied to the binding material by the tensioning means.

In another embodiment of the invention one of the first and second tensioning elements is carried on a carrier member, and preferably, on an elongated carrier member, and advantageously, the carrier member is pivotally mounted about a pivot axis, and preferably, the pivot axis coincides with a central axis defined by the other one of the first and second tensioning elements.

Preferably, the first tensioning element is moveable relative to the second tensioning element.

In one embodiment of the invention the tension reducing means comprises the adjusting means for adjusting the tension applied to the binding material by the tensioning means.

In one embodiment of the invention the primary feeding means comprises a primary feed roller and a pinch roller cooperating with the primary feed roller for accommodating the binding material therebetween.

In one embodiment of the invention the primary feed roller is driven through a primary one-way freewheel clutch, the primary one-way freewheel clutch being configured to operate in an active mode for transmitting drive therethrough to the primary feed roller to operate the primary feeding means in the active mode, and to operate in a passive freewheeling mode to operate the primary feeding means in the passive mode to permit the primary feed roller to freely rotate in the feeding direction when the binding material is being drawn through the primary feeding means in the feeding direction into the pressing means by the rotating action of a bale therein and the linear speed at which the binding material is being drawn into the pressing means is greater than the linear speed at which the primary feeding means feeds the binding material.

In one embodiment of the invention the primary one-way freewheel clutch comprises a first sprag clutch.

In one embodiment of the invention a primary drive transmission is provided for driving the primary feeding means in the active mode thereof, and preferably, the primary drive transmission derives drive from a main drive transmission of the baler configured to transmit drive to the pressing means for rotating the bale therein.

In another embodiment of the invention the primary drive transmission is selectively engageable with the main drive transmission for operating the primary feeding means in the active mode for initially feeding the binding material into the pressing means until the binding material engages the rotating bale in the pressing means.

In another embodiment of the invention the primary drive transmission is engageable with the main drive transmission in response to completion of the formation of the bale in the pressing means.

Preferably, the primary drive transmission is disengaged from the main drive transmission in response to the linear speed of the binding material through the primary feeding means exceeding the linear speed thereof at which the binding material is fed by the primary feeding means therethrough, or a predefined time period having elapsed since the commencement of engagement of the primary drive transmission with the main drive transmission.

In one embodiment of the invention the predefined time period lies in the range of 2 seconds to 7 seconds, and preferably, in the range of 2.5 seconds to 5 seconds, and advantageously, approximately 3 seconds.

In another embodiment of the invention the predefined time period lies in the range of 1 second to 5 seconds, and preferably, lies in the range of 1.5 seconds to 3 seconds, and advantageously, is approximately 2 seconds.

In one embodiment of the invention a secondary drive transmission is provided to transmit drive from the main drive transmission to the secondary feeding means, and preferably, the secondary drive transmission is configured to transmit drive to the secondary feeding means from the primary drive transmission.

In another embodiment of the invention the secondary drive transmission is configured to transmit drive from the primary feeding means to the secondary feeding means. Preferably, the secondary drive transmission is configured to transmit drive from the primary feeding means to the secondary feeding means.

In one embodiment of the invention the primary drive transmission and the secondary drive transmission comprise a single drive transmission.

In one embodiment of the invention the secondary feeding means is driven through a secondary one-way freewheel clutch, the secondary one-way freewheel clutch being configured to operate in an active mode for transmitting drive therethrough to the secondary feeding means to operate the secondary feeding means in an active mode, and to operate in a passive freewheeling mode to operate the secondary feeding means in a passive mode to permit the secondary feeding means to freely rotate in the feeding direction when the binding material is drawn through the secondary feeding means in the feeding direction into the pressing means by the rotating action of a bale therein and the linear speed at which the binding material is drawn into the pressing means is greater than the linear speed at which the secondary feeding means feeds the binding material.

In one embodiment of the invention the secondary one-way freewheel clutch comprises a second sprag clutch.

In one embodiment of the invention drive is transmitted from the primary drive transmission to the secondary drive transmission, and preferably, the drive from the secondary drive transmission to the secondary feeding means is transmitted through the second sprag clutch.

Alternatively, the tensioning means comprises a resistance creating means for inducing resistance to feeding of the binding material from the roll thereof.

In one embodiment of the invention the resistance creating means comprises a resistance roller engageable with an outer surface of the roll of binding material for providing a resistance to rotation of the roll thereof, for in turn applying tension to the binding material as it is being drawn from the roll thereof.

In another embodiment of the invention a brake acts on the resistance roller for tensioning the binding material as it is being drawn from the roll thereof.

In another embodiment of the invention the brake is configured for applying a variable braking force to the resistance roller for varying the tension applied to the binding material.

Alternatively, the brake acts on the spindle on which the bale is mounted fast thereon for inducing resistance to the rotation of the roll as binding material is being drawn therefrom.

The invention also provides a baler comprising a pressing means for rotating, pressing and forming material into a round bale, the baler comprising the feeding system according to the invention.

Additionally, the invention provides a baler comprising a pressing means to rotate, press and form material into a round bale, the baler comprising a primary feeding means selectively operable in an active mode to feed binding material from a roll thereof into the pressing means to circumferentially bind the bale in the pressing means and a passive mode during which the binding material may be freely drawn through the primary feeding means, a tensioning means for tensioning the binding material, and a tension reducing means for reducing the tension in the binding material while the primary feeding means is operating in the active mode.

In one embodiment of the invention the baler comprises a roller baler comprising a plurality of bale rotating rollers defining at least a portion of a bale chamber of the pressing means within which the bale is rotated, pressed and formed. Preferably, the bale rotating rollers are configured to define the bale chamber.

In another embodiment of the invention the baler comprises a fixed chamber baler.

The invention also provides a method for feeding binding material from a roll thereof into a pressing means of a bale chamber in which the pressing means is configured to rotate, press and form material into a round bale, the method comprising providing a primary feeding means selectively operable in an active mode to feed binding material from the roll thereof into the pressing means to circumferentially bind the bale in the pressing means, and a passive mode during which the binding material may be drawn through the primary feeding means, providing a tensioning means for tensioning the binding material, providing a tension reducing means for reducing the tension applied to the binding material by the tensioning means, initially operating the primary feeding means in the active mode to feed the binding material from the roll thereof into the pressing means until the binding material engages the rotating bale in the pressing means, and operating the tension reducing means to reduce the tension applied to the binding material by the tensioning means while the primary feeding means is operating in the active mode.

Preferably, operation of the primary feeding means in the feeding mode is terminated when the binding material is being drawn into the pressing means, or when a predefined time period has elapsed from the commencement of the operation of the primary feeding means in the active mode. Advantageously, the primary feeding means is operated in the passive mode in response to the binding material being drawn into the pressing means.

The advantages of the invention are many. A particularly important advantage of the invention is that the feeding system according to the invention allows binding material for circumferentially securing a bale in a pressing means of a baler to be tensioned as it is being drawn into the pressing means by the rotating action of a bale in the pressing means, while it allows the tension applied to the binding material to be reduced during initial feeding of the binding material into the pressing means. This advantage avoids any danger of the initial feeding of the binding material into the pressing means failing, and avoids any danger of slippage of the binding material in the primary feeding means during initial feeding of the binding material by the primary feeding means into the pressing means. Additionally, the fact that the binding material is tensioned while the binding material is being drawn into the pressing means by the rotating action of the bale in the pressing means provides a tightly circumferentially bound bale that is better shaped and can be more conveniently handled and stored and has enhanced anaerobic fermentation characteristics.

Another advantage of the invention is that it provides a tensioning means which is readily and easily adjusted.

A further advantage of the invention is achieved by the provision of the tension reducing means, which enables the tension induced in the binding material to be reduced without the need to alter or adjust the tensioning means. This advantage further allows the tensioning means to be set to provide a desired degree of tension in the binding material once during a baling session, where a number of bales are formed sequentially in the pressing means without the need to take any further action in connection with the tensioning means during the baling session.

The invention will be more clearly understood from the following description of a preferred embodiment thereof which is given by way of example only with reference to the accompanying drawings, in which:
Fig. 1 is a perspective view of a baler according to the invention,
Fig. 2 is another perspective view of the baler of Fig. 1 illustrating a portion of the baler in a different state to that of Fig. 1,

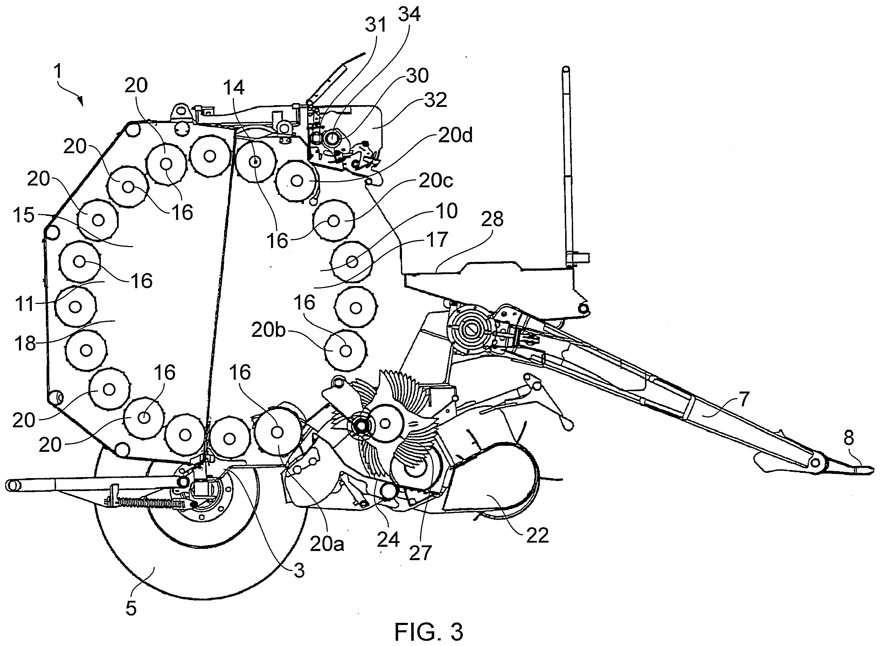

Fig. 3 is a cross-sectional side elevational view of the baler of Fig. 1 in the state of Fig. 1,
Fig. 4 is a side elevational view of a portion of the baler of Fig. 1,
Fig. 5 is a view similar to that of Fig. 4 of the portion of Fig. 4 of the baler of Fig. 1 illustrating a detail of the portion of Fig. 4 in a different state to that of Fig. 4,
Fig. 6 is a side elevational view of another portion of the baler of Fig. 1,
Fig. 7 is an enlarged side elevational view of a detail of the portion of Fig. 6 of the baler of Fig. 1,
Fig. 8 is a cross-sectional side elevational view of another portion of the baler of Fig. 1, and
Fig. 9 is a block diagram of a control circuit for controlling a part of the baler of Fig. 1.

Referring to the drawings there is illustrated a baler according to the invention indicated generally by the reference numeral 1 for forming crop material into a round bale (not shown). The baler 1 comprises a fixed chamber roller baler mounted on a chassis 3 supported on a pair of rotatably mounted ground engaging wheels 5. A forwardly extending arm 7 extends from the chassis 3 and terminates in a coupler 8 for coupling the baler 1 to a towing vehicle, typically, a tractor (not shown). Such a baler as the baler 1 will be well known to those skilled in the art, and only the parts of the baler 1 relevant to the invention will be described.

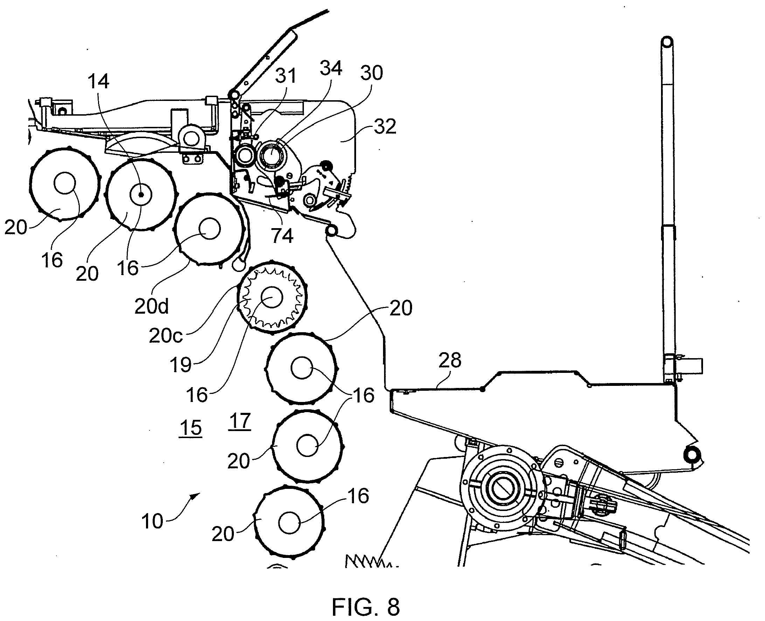

Briefly, the baler 1 comprises a forward fixed segment 10 rigidly mounted on the chassis 3, and a closure segment 11 pivotally coupled to the fixed segment 10 about an upper pivot axis 14. The fixed segment 10 and the closure segment 11 together define a pressing means, in this embodiment of the invention a bale chamber 15 within which the material to be baled is rotated, pressed and formed into a bale. The fixed segment 10 comprises a pair of spaced apart forward side walls 17, and the closure segment 11 comprises a pair of spaced apart rearward side walls 18. A plurality of bale rotating rollers 20 extend between and are rotatably mounted in the forward and rearward side walls 17 and 18 for rotating the crop material in the bale chamber 15 to form a bale thereof. The bale rotating rollers 20 are mounted fast on respective shafts 16 which are rotatably carried in the corresponding forward and rearward side walls 17 and 18. Sprockets 19, only one of which is illustrated in Fig. 8, are mounted fast on the respective shafts 16. A main drive transmission comprising a main drive chain (not shown) drives the sprockets 19, for in turn driving the bale rotating rollers 20 in rotation for rotating the crop material in the bale chamber 15 to form the bale as will be understood by those skilled in the art.

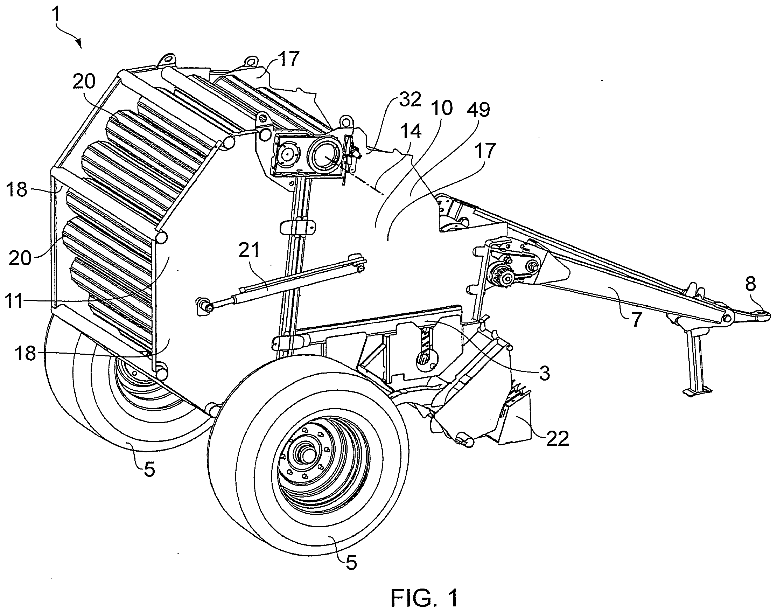

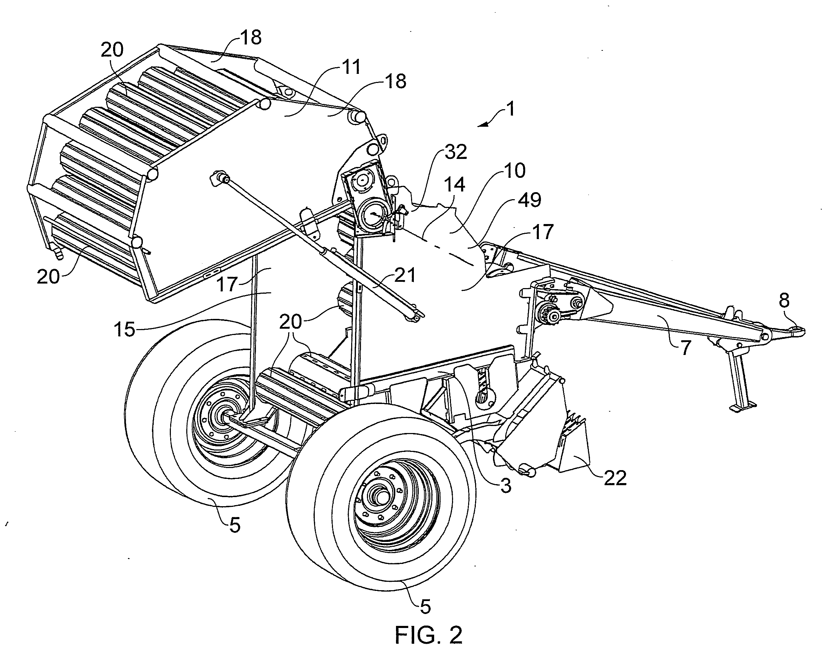

Two main double-acting hydraulic rams 21 are pivotally coupled to the forward and rearward side walls 17 and 18 of the fixed segment 10 and the closure segment 11 on opposite sides of the baler 1. The main rams 21 act between the fixed segment 10 and the closure segment 11 to pivot the closure segment 11 about the upper pivot axis 14 from a closed state illustrated in Fig. 1 with the bale rotating rollers 20 and the forward and rearward side walls 17 and 18 defining the bale chamber 15, and an open state illustrated in Fig. 2 for discharging a formed and circumferentially bound bale from the bale chamber 15. As well as pivoting the closure segment 11 between the closed and open states, the main rams 21 also apply pressure to the crop material in the bale chamber 15 as the crop material is being rotated and formed into a bale therein in order that the bale is formed to a selectable desired bale density, as will be understood by those skilled in the art.

A pick-up mechanism 22 located forwardly on the chassis 3 is configured to pick up crop material from a windrow thereof and transfer the crop material onto a transfer platform 24. A transfer and chopping drum 27 rotatably mounted above the transfer platform 24 transfers the crop material along the transfer platform 24 and feeds the crop material into the bale chamber 15 between a pair of the bale rotating rollers 20, namely, between the bale rotating rollers 20a and 20b in the fixed segment 10. The bale rotating rollers 20a and 20b are appropriately spaced apart to accommodate the crop material therebetween into the bale chamber 15. Such pick-up mechanisms for picking up crop material from the ground, and such transfer and chopping drums for chopping crop material and transferring and feeding the crop material into a bale chamber 15 will be well known to those skilled in the art.

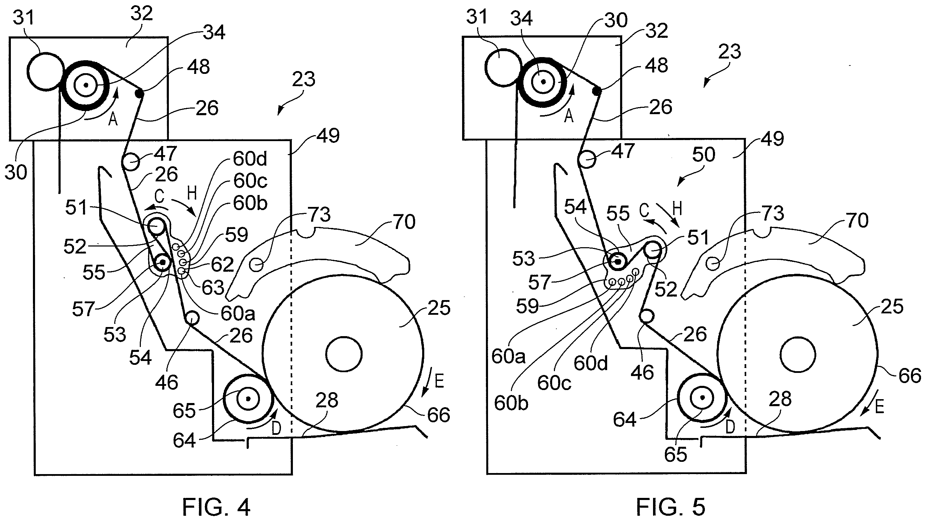

Referring now in particular to Figs. 4 to 7, a feeding system also according to the invention and indicated generally by the reference numeral 23 is provided for feeding a binding material into the bale chamber 15 for circumferentially binding a completed formed bale in the bale chamber 15. The binding material may be any suitable binding material. In this embodiment of the invention the binding material comprises a roll 25 of net wrapping material 26. However, the binding material may, for example, comprise sheet plastics film material or any other suitable material. A well 28 located on the chassis 3 forward of the fixed segment 11 is provided for accommodating and supporting the roll 25 of net wrapping material 26.

The feeding system 23 comprises a primary feeding means for feeding the net wrapping material 26 into the bale chamber 15. The primary feeding means comprises a primary feed roller 30 mounted fast on a primary driven shaft 34 and a cooperating pinch roller 31 for feeding the net wrapping material 26 into the bale chamber 15. Both the primary driven shaft 34 and the pinch roller 31 are rotatably mounted on and between a pair of spaced apart first mounting plates 32 extending upwardly and forwardly from the respective forward side walls 17 of the fixed segment 10. The pinch roller 31 is spring urged into engagement with the primary feed roller 30 and cooperates with the primary feed roller 30 to tightly engage the net wrapping material therebetween. The primary feed roller 30, as will be described below, is driven in the direction of the arrow A for feeding the net wrapping material into the bale chamber 15 between a pair of the bale rotating rollers 20 of the fixed segment 10, namely, the bale rotating rollers 20c and 20d. The primary feed roller 30 and the pinch roller 31 feed the net wrapping material 26 into the bale chamber 15 until the net wrapping material 26 is engaged between the bale rotating rollers 20 and the rotating bale in the bale chamber 15, after which the action of the bale rotating rollers 20 and the rotating bale draws the net wrapping material 26 from the roll 25 thereof through the primary feed roller 30 and the pinch roller 31 at a faster rate than the rate at which the net wrapping material 26 is fed into the bale chamber 15 by the primary feed roller 30 and the pinch roller 31 as will also be described below in more detail.

A primary drive transmission means for selectively transmitting drive to the primary driven shaft 34 of the primary feed roller 30 from the main drive chain (not shown), which drives the bale rotating rollers 20 through the respective sprockets 19, comprises a primary belt drive transmission indicated generally by the reference numeral 35. The primary belt drive transmission 35 comprises a drive belt 36 extending around a drive pulley 37, a first driven pulley 39 and a second driven pulley 40 for transmitting drive from the drive pulley 37 to the first and second driven pulleys 39 and 40. The drive pulley 37 is mounted fast on and concentrically with an electromagnetic clutch 38, which in turn is mounted fast on and concentrically with the shaft 16 of one of the bale rotating rollers 20, so that drive is selectively transmitted from the shaft 16 to the drive pulley 37 through the electromagnetic clutch 38. The electromagnetic clutch 38 is selectively operable under the control of a microcontroller 42 of a control circuit 41 of the baler 1 in an engaged state for transmitting drive therethrough from the shaft 16 to the drive pulley 37, and a disengaged state preventing the transmission of drive from the shaft 16 to the drive pulley 37, as will be described below.

The first driven pulley 39 is mounted fast on and concentrically with a primary one-way freewheel clutch, in this case, a first sprag clutch 33. The first sprag clutch 33 is mounted fast on and concentrically with the primary driven shaft 34 of the primary feed roller 30. Accordingly, drive is selectively transmitted through the electromagnetic clutch 38 through the primary belt drive transmission 35 through the first driven pulley 39 and the first sprag clutch 33 to the primary feed roller 30. The first sprag clutch 33 is configured to operate in an active mode and in a passive mode. In the active mode the first sprag clutch 33 drives the primary feed roller 30 in an active mode in the direction of the arrow A to feed the net wrapping material 26 into the bale chamber 15. In the passive mode of the first sprag clutch 33, the primary feed roller 30 operates in a passive mode so that as the net wrapping material 26 is being drawn into the bale chamber 15 by the action of the rotating bale rotating rollers 20 and the rotating bale at the faster rate than it is fed by the primary feed roller 30, the primary feed roller 30 rotates in the direction of the arrow A with the first sprag clutch 33 freewheeling, in order to permit the net wrapping material 26 to be drawn into the bale chamber 15 by the action of the rotating bale rotating rollers 20 and the bale.

In this embodiment of the invention the microcontroller 42 is the microcontroller which controls the operation of the baler 1, and is programmed so that on determining completion of the formation of a bale in the bale chamber 15, as will be understood by those skilled in the art, the microcontroller 42 outputs a signal to the electromagnetic clutch 38 to operate the clutch 38 in the engaged state to transmit drive to the drive pulley 37, and in turn through the drive belt 36 to the first and second driven pulleys 39 and 40. Drive is transmitted from the first driven pulley 39 through the first sprag clutch 33 to the primary feed roller 30 to feed the net wrapping material 26 into the bale chamber 15.

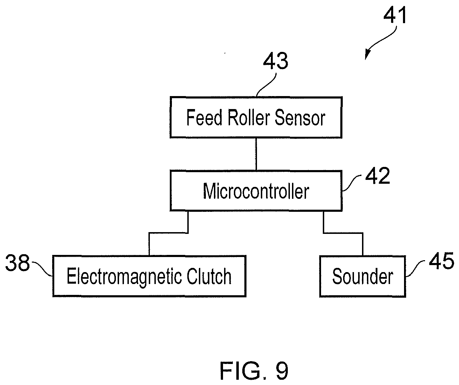

A feed roller sensor 43 monitors the rotational speed of the primary feed roller 30 and produces a signal indicative of the rotational speed of the primary feed roller 30, see Fig. 9. The microcontroller 42 reads the signal from the feed roller sensor 43, and is programmed to determine from the value of the signal produced by the feed roller sensor 43 when the rotational speed of the primary feed roller 30 is indicative of the net wrapping material 26 being drawn into the bale chamber 15 by the action of the bale rotating rollers 20 and the rotating bale in the bale chamber 15 on the net wrapping material 26.

On operating the electromagnetic clutch 38 into the engaged state, the microcontroller 42 reads the signal from the feed roller sensor 43 to determine when the signal from the feed roller sensor 43 is indicative of the net wrapping material 26 being drawn into the bale chamber 15 under the action of the rotating bale rotating rollers 20 and the rotating bale. On the microcontroller 42 determining that the net wrapping material 26 is being drawn into the bale chamber 15 by the action of the bale rotating rollers 20 and the rotating bale, the microcontroller 42 outputs a signal to the electromagnetic clutch 38 to operate the electromagnetic clutch 38 into the disengaged state, to thereby terminate transmission of drive to the primary feed roller 30.

The microcontroller 42 is configured to time a predefined time period, which in this embodiment of the invention is approximately 2 seconds, from the commencement of the electromagnetic clutch 38 being operated in the engaged state. On the predefined time period having timed out, the electromagnetic clutch 38 is operated by the microcontroller 42 into the disengaged state. The net wrapping material 26 should have been engaged by the rotating bale rotating rollers 20 and the rotating bale in the bale chamber 15 within the 2 second predefined time period. If the value of the signal read from the feed roller sensor 43 by the microcontroller 42 after the 2 second predefined time period indicates failure of the net wrapping material 26 to be engaged by the bale rotating rollers 20 and the rotating bale in the bale chamber 15, the microcontroller 42 operates a sounder 45 to produce an alert signal alerting to the failure of circumferential wrapping of the bale in the bale chamber 15.

Before describing the primary belt drive transmission 35 in further detail, the feed path of the net wrapping material 26 from the roll 25 thereof of the feeding system 23 will first be described.

Referring now to Figs. 4 and 5, the roll 25 of the net wrapping material 26 is supported in the well 28, so that as the net wrapping material 26 is being drawn from the roll 25 by either the primary feed roller 30 being driven in the active mode, or by the action of the bale rotating rollers 20 and the rotating bale in the bale chamber 15 on the net wrapping material 26, the roll 25 rotates in the well 28. The net wrapping material 26 is drawn from the roll 25 past three non-rotatable intermediate shafts of circular transverse cross-section before engaging the primary feed roller 30 and the pinch roller 31, namely, a non-rotatable first intermediate shaft 46, a non-rotatable second intermediate shaft 47 and a non-rotatable third intermediate shaft 48. The first, second and third intermediate shafts 46, 47 and 48 are mounted on and extend between a pair of spaced apart second mounting plates 49 extending forwardly from the forward side walls 17 of the fixed segment 10.

A tensioning means comprising a tensioning system indicated generally by the reference numeral 50 is provided for applying tension to the net wrapping material 26 as it is being drawn from the roll 25 into the bale chamber 15 by the cooperating rotating action of the bale rotating rollers 20 and the rotating bale therein on the net wrapping material 26. The tensioning system 50 is located between the non-rotatable first intermediate shaft 46 and the non-rotatable second intermediate shaft 47. The tensioning system 50 comprises a first tensioning element comprising a non-rotatable first tensioning shaft 51 of circular transverse cross-section defining a first surface 52, and a second tensioning element comprising a non-rotatable second tensioning shaft 53, also of circular transverse cross section defining a second surface 54. The second tensioning shaft 53 is mounted fast on and extends between the second mounting plates 49. The first tensioning shaft 51 is carried on a moveable carrier means, which in this embodiment of the invention comprises a pair of spaced apart elongated carrier members 55 which are pivotally mounted on the respective second mounting plates 49 about a pivot axis 57 which coincides with a central longitudinal axis defined by the second tensioning shaft 53. The first tensioning shaft 51 extends between and is mounted fast on the carrier arms 55, and is spaced apart from and parallel to the second tensioning shaft 53.

The net wrapping material 26 is passed from the first intermediate shaft 46 partly around the first tensioning shaft 51, and from the first tensioning shaft 51 partly around the second tensioning shaft 53, and in turn to the second intermediate shaft 47. The degree of tension applied to the net wrapping material 26 by the tensioning system 50 is selectable by pivoting the carrier members 55 about the pivot axis 57. By urging the carrier members 55 in the direction of the arrow C about the main pivot axis 57 from the position illustrated in Fig. 5 to the position illustrated in Fig. 4, the degree of tension applied by the tensioning system 50 to the net wrapping material 26 is progressively increased, and by urging the carrier members 55 in the direction of the arrow H, the tension applied to the net wrapping material is reduced.

As the carrier members 55 are urged in the direction of the arrow C from the position illustrated in Fig. 5 to the position illustrated in Fig. 4, the angular distance around the first surface 52 of the first tensioning shaft 51 and the angular distance around the second surface 54 of the second tensioning shaft 53 engaged by the net wrapping material 26 progressively increase, thereby progressively increasing the frictional force between the net wrapping material 26 and the first and second surfaces 52 and 54 of the first and second tensioning shafts 51 and 53, to in turn increase the tension applied to the net wrapping material 26 by the tensioning system 50.

An adjusting means comprising an adjustment plate 59 formed by a part of one of the carrier members 55 is provided with a plurality of index openings 60, in this case four equi-spaced apart index openings 60a, 60b, 60c and 60d, which are alignable with a fixing opening 62 in a corresponding one of the second mounting plates 49. A securing pin 63 is engageable with the fixing opening 62 through a selected one of the index openings 60 in the adjustment plate 59 to set the carrier members 55, and in turn the first tensioning shaft 51 in one of four selectable angular positions about the pivot axis 57 for selectively setting the tension to be applied to the net wrapping material 26 at one of four corresponding selectable values.

The angular distances around the first and second surfaces 52 and 54 of the respective first and second tensioning shafts 51 and 53 engageable by the net wrapping material 26 are at their maximum when the first tensioning shaft 51 is in the position illustrated in Fig. 4, with the securing pin 63 engaging the fixing opening 62 through the index opening 60a. In this position of the first tensioning shaft 51, the angular distance around which the net wrapping material 26 engages the first surface 52 of the first tensioning shaft 51, is approximately 209°, and the angular distance around which the net wrapping material 26 engages the second surface 54 of the second tensioning shaft 53 is approximately 202°. When the tensioning system is set with the securing pin 63 engaging the fixing opening 62 through the index opening 60d in the adjustment plate 59 illustrated in Fig. 5, the first tensioning shaft 51 is set such that the angular distance around which the net wrapping material 26 engages the first surface 52 of the first tensioning shaft 51 is approximately 157°, and the angular distance around which the net wrapping material 26 engages the second surface 54 of the second tensioning shaft 53 is approximately 121°.

A means for reducing the tension applied by the tensioning system 50 to the net wrapping material 26 while the primary feed roller 30 is being operated in the active mode to feed the net wrapping material 26 into the bale chamber 15, in this embodiment of the invention comprises a secondary feeding means, in this case, a secondary feed roller 64, see Figs 4 to 7. The secondary feed roller 64 is mounted fast on a secondary driven shaft 65, which is rotatably mounted in and between the second mounting plates 49. The secondary feed roller 64 is engageable with and cooperates with an outer surface 66 of the roll 25 of the net wrapping material 26 and is driven by the primary belt drive transmission 35, as will be described below, in the direction of the arrow D, to in turn rotate the roll 25 in the direction of the arrow E for feeding the net wrapping material 26 from the roll 25 thereof to the tensioning system 50. The secondary feed roller 64 is operated to feed the net wrapping material 26 from the roll 25 in response to the primary feed roller 30 being driven by the primary belt drive transmission 35 in the active mode, and while the primary feed roller 30 is being driven in the active mode for feeding the net wrapping material 26 from the roll 25 into the bale chamber 15. In this embodiment of the invention the secondary feed roller 64 is driven at a speed relative to the speed of the primary feed roller 30, so that the linear speed at which the net wrapping material 26 is fed from the roll 25 thereof is approximately 3% greater than the linear speed at which the net wrapping material 26 is fed by the primary feed roller 30 between the primary feed roller 30 and the pinch roller 31. By operating the secondary feed roller 64 to feed the net wrapping material 26 from the roll 25 to the tensioning system 50 when the primary feed roller 30 is operating in the active mode, and in particular, to feed the net wrapping material 26 from the roll 25 thereof at a linear speed approximately 3% greater than the linear speed at which the net wrapping material 26 is fed by the primary feed roller 30 and the pinch roller 31, the tension applied to the net wrapping material 26 by the tensioning system 50 is sufficiently reduced to allow the primary feed roller 30 and the pinch roller 31 to feed the net wrapping material 26 into the bale chamber 15.

A secondary drive transmission means, which in this embodiment of the invention is located in the primary drive transmission means, namely, in the primary belt drive transmission 35, drives the secondary feed roller 64 in the direction of the arrow D for feeding the net wrapping material 26 from the roll 25 thereof. The secondary drive transmission means comprises a secondary one-way freewheel clutch, in this case provided by a second sprag clutch 67 mounted fast on and concentric with the secondary driven shaft 65. The secondary drive transmission means also comprises the second driven pulley 40 of the primary belt drive transmission 35. The second driven pulley 40 is mounted fast on and concentric with the second sprag clutch 67. The second sprag clutch 67 is configured to operate in an active mode and in a passive mode. In the active mode the second sprag clutch 67 is configured to transmit drive from the second driven pulley 40 to the secondary feed roller 64 to rotate the secondary feed roller 64 in an active mode in the direction of the arrow D when the second driven pulley 40 is driven in the direction of the arrow G, to rotate the roll 25 in the direction of the arrow E. In the passive mode the second sprag clutch 67 is configured to permit the secondary feed roller 64 to rotate freely in the direction of the arrow D in a passive mode thereof with the second sprag clutch 67 freewheeling when the linear speed of the net wrapping material 26 being drawn from the roll 25 thereof is greater than the linear speed at which the net wrapping material 26 is dispensed from the roll 25 by the secondary feed roller 64 when driven by the second driven pulley 40. Accordingly, the secondary feed roller 64 is driven in the direction of the arrow D for feeding the net wrapping material 26 to the tensioning system 50 while the primary belt drive transmission 35 is driving the primary feed roller 30, thereby reducing the tension applied to the net wrapping material 26 by the tensioning system 50 while the net wrapping material 26 is being fed into the bale chamber 15 by the primary feed roller 30 and the pinch roller 31.

In this embodiment of the invention in order to obtain the 3% differential between the linear speeds at which the net wrapping material is fed by the secondary feed roller 64 and by the primary feed roller 30, the effective diameters of the first driven pulley 39 and the second driven pulley 40 are such that the linear speed at which the net wrapping material 26 is fed from the roll 25 thereof by the secondary feed roller 64 operating in the active mode is approximately 3% faster than the linear speed at which the net wrapping material 26 is fed into the bale chamber 15 by the primary feed roller 30 operating in the active mode. This, it has been found, as discussed above, further reduces the tension applied by the tensioning system 50 to the net wrapping material 26 sufficiently to enable the primary feed roller 30 to draw the net wrapping material 26 from the roll 25 through the tensioning system 50 when the primary feed roller 30 is operating in the active mode.

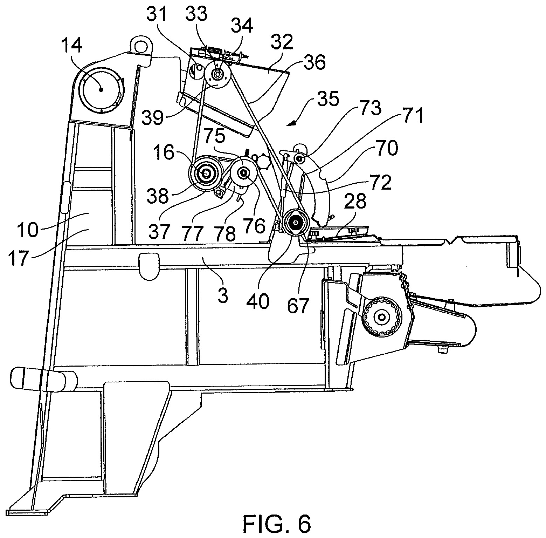

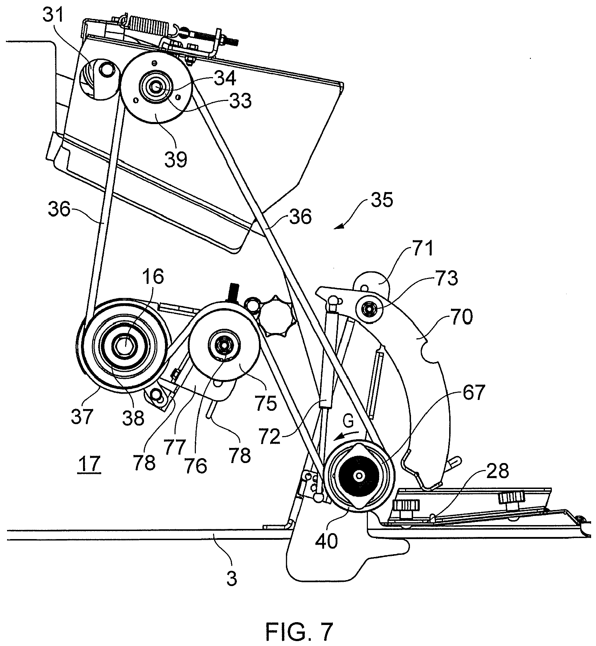

A braking means comprising a shoe shaped brake 70 is pivotally carried on a mounting member 71 engageable with the outer surface 66 of the roll 25 of the net wrapping material 26 for applying a light braking force to the roll 25 to prevent uncontrolled rotation of the roll 25. The brake 70 is pivotally carried on a pivot pin 73 extending from the mounting member 71 which extends upwardly from the chassis 3, and is urged into engagement with the outer surface 66 of the roll 25 by a gas spring 72. The gas spring 72 acts between the mounting member 71 and the brake 70, see Figs. 6 and 7. The action of the brake 70 on the roll 25 urges the roll 25 into engagement with the secondary feed roller 64. In this embodiment of the invention the brake 70 is provided not to induce tension in the net wrapping material 26, but to prevent the roll 25 rotating out of control in response to a sudden pulling force being applied to the net wrapping material 26, either by the primary feed roller 30 commencing to operate in the active mode, or by the net wrapping material 26 being drawn from the roll 25 by the initial engagement of the net wrapping material 26 between the bale rotating rollers 20 and the rotating bale in the bale chamber 15. Such uncontrolled rotation of the roll 25 would result in excess net wrapping material 26 being dispensed from the roll 25, which would in turn reduce the tension being applied by the tensioning system 50 to the net wrapping material 26.

A net cutting knife 74 is mounted between the first mounting plates 32 for severing the net wrapping material 26 below the primary feed roller 30 and between the primary feed roller 30 and the bale chamber 15 on completion of circumferential wrapping of the bale in the bale chamber 15. Such net cutting knifes as the net cutting knife 74 and their operation will be well known to those skilled in the art.

Returning now to the primary belt drive transmission 35, a tensioning pulley 75 is provided in the primary belt drive transmission 35 for tensioning the drive belt 36. The tensioning pulley 75 is located between the drive pulley 37 and the second driven pulley 40, and is rotatably mounted on a shaft 76 which extends from and is carried on a support element 77. The support element 77 is slideable on a pair of spaced apart rails 78 mounted on a corresponding one of the second mounting plates 49 extending forwardly from the corresponding forward side wall 17 of the fixed segment 10 for tensioning the drive belt 36.

In use, prior to commencing baling of crop material by the baler 1, the tensioning system 50 is set to apply the desired tension to the net wrapping material 26 as it is being drawn from the roll 25 by the cooperating action of the bale rotating rollers 20 and the rotating bale in the bale chamber 15 on the net wrapping material 26. The carrier members 55 are pivoted about the pivot axis 57 in order to locate the first tensioning shaft 51 at the appropriate angular position around the pivot axis 57 relative to the second tensioning shaft 53 to apply the desired tension to the net wrapping material 26. With the carrier members 55 located in the desired orientation around the pivot axis 57, the securing pin 63 is engaged through the appropriate one of the index openings 60 in the adjustment plate 59 and in turn into the fixing opening 62 in the corresponding second mounting plate 49.

With the tensioning system 50 set to apply the desired selected tension in the net wrapping material 26 and the closure segment 11 of the baler 1 in the closed state, the baler 1 is towed by a tractor (not shown) along a windrow of crop material. The crop material is picked up from the windrow by the pick-up mechanism 22 and transferred onto the transfer platform 24. The chopping drum 27 urges the crop material along the transfer platform 24 and into the bale chamber 15 where it is rotated, pressed and formed into a round bale. During rotating, pressing and forming of the crop material into a bale in the bale chamber 15, the electromagnetic clutch 38 is operated in the disengaged state by the microcontroller 42 with the drive pulley 37 disengaged from the shaft 16 of the corresponding bale rotating roller 20.

On the bale being formed in the bale chamber 15 to the desired size and density, the electromagnetic clutch 38 is operated by the microcontroller 42 into the engaged state to transfer drive therethrough from the shaft 16 of the corresponding bale rotating roller 20 to the drive pulley 37. The drive belt 36 transmits drive from the drive pulley 37 to the first and second driven pulleys 39 and 40, from which drive is simultaneously transmitted through the first and second sprag clutches 33 and 67 to operate the primary feed roller 30 and the secondary feed roller 64 in the active modes, with the primary feed roller 30 being driven in the direction of the arrow A to feed the net wrapping material 26 into the bale chamber 15, and the secondary feed roller 64 being driven in the direction of the arrow D to in turn feed the net wrapping material 26 from the roll 25 to the tensioning system 50. Accordingly, as the primary feed roller 30 is being operated in the active mode to feed the net wrapping material 26 into the bale chamber 15, the secondary feed roller 64 is simultaneously operated in the active mode with the secondary feed roller 64 being driven in the direction of the arrow D for feeding the net wrapping material 26 from the roll 25 to the tensioning system 50, to in turn reduce the tension being applied to the net wrapping material 26 by the tensioning system 50 as it is being drawn by the primary feed roller 30 through the tensioning system 50. Once the net wrapping material 26 is engaged between the bale rotating rollers 20 and the rotating bale in the bale chamber 15, the net wrapping material 26 is drawn into the bale chamber 15 by the rotating action of the bale and the bale rotating rollers 20 to thereby circumferentially wrap the bale in the bale chamber 15.

The net wrapping material 26 is drawn into the bale chamber 15 by the cooperating action of the rotating bale rotating rollers 20 and the rotating bale at a greater linear speed than the linear speed at which the net wrapping material 26 is fed into the bale chamber 15 by the primary feed roller 30. The linear speed with which the net wrapping material 26 is drawn from the roll 25 is also greater than the linear speed with which the net wrapping material 26 is fed from the roll 25 thereof by the secondary feed roller 64. Thus, once the linear speed of the net wrapping material 26 increases above the linear speeds with which the net wrapping material 26 is being fed by the primary feed roller 30 and the secondary feed roller 64, the first and second sprag clutches 33 and 67 operate in respective passive modes with the primary feed roller 30 and the secondary feed roller 64 continuing to rotate in the direction of the arrows A and D, respectively, at higher rotational speeds dictated by the linear speed with which the net wrapping material 26 is being drawn into the bale chamber 15 by the cooperating action of the rotating bale rotating rollers 20 and the rotating bale.

On the microcontroller 42 determining from the value of the signal read from the feed roller sensor 43 that the rotational speed of the primary feed roller 30 is indicative of the net wrapping material 26 being drawn into the bale chamber by the cooperation action of the rotating bale rotating rollers 20 and the rotating bale in the bale chamber 15, the microcontroller 42 operates the electromagnetic clutch 38 into the disengaged state, thereby disengaging drive from the drive shaft 16 of the corresponding bale rotating roller 20 to the drive pulley 37, and in turn to the primary feed roller 30 and the secondary feed roller 64.

Once the net wrapping material 26 is being drawn into the bale chamber 15 by the action of the rotating bale rotating rollers 20 and the rotating bale in the bale chamber 15, the net wrapping material 26 is tensioned by the tensioning system 50 to the selected tension determined by the angular setting of the first tensioning shaft 51 about the pivot axis 57, so that the bale is circumferentially wrapped by the net wrapping material 26 at the desired tension, in order that the circumferentially wrapped bale is of the desired diameter and the desired bale density.

However, if after the predefined time period of 2 seconds from the commencement of the electromagnetic clutch 38 operating in the engaged state, the value of the signal read from the feed roller sensor 43 by the microcontroller 42 is not indicative of the net wrapping material 26 being drawn into the bale chamber 15 by the action of the rotating bale rotating rollers 20 and the rotating bale in the bale chamber 15, the microcontroller 42 operates the electromagnetic clutch 33 into the disengaged state and operates the sounder 45 to produce the alert signal alerting to failure of the circumferential wrapping of the bale in the bale chamber 15.

On completion of the circumferential wrapping of the bale in the bale chamber 15, the net cutting knife 74 is operated to sever the net wrapping material 26 circumferentially wrapped around the bale from the net wrapping material 26 between the bale and the primary feed roller 30. The closure segment 11 is then pivoted rearwardly and upwardly about the upper pivot axis 14 from the closed bale forming state to the open state to discharge the circumferentially wrapped bale from the bale chamber 15.

While the baler has been described as comprising a fixed segment and a closure segment which together define the bale chamber, it is envisaged in some embodiments of the invention that the baler may comprise a fixed segment, a closure segment and a tipping segment, whereby the fixed, closure and tipping segments would form the bale chamber, and the closure segment would be pivotal from a closed bale forming state to an open state and the tipping segment would be tippable from a bale forming state defining with the fixed segment and the closure segment in the closed state the bale chamber, and a tipped state for discharging the bale from the bale chamber when the closure segment is in the open state. Such a baler is described in the specification in the applicant's published PCT Application No. WO 02/076183.

While the tension reducing means has been described as comprising the secondary feed roller, in some embodiments of the invention it is envisaged that the secondary feed roller may be dispensed with, and the tension reducing means would be provided by altering the tension induced in the net wrapping material by the tensioning system. For example, in such case, it is envisaged that the carrier members on which the first tensioning shaft 51 is mounted would be pivotally operated about the pivot axis 57 by a suitable operating means, for example, a hydraulic ram or a stepper motor or a rotary hydraulic motor for pivoting the carrier members in the direction of the arrow H from the selected set position to apply the selected tension to the net wrapping material, to a position whereby the tension applied by the tensioning system would be reduced, for example, to a position beyond that of Fig. 5 in the direction of the arrow H, where the net wrapping material would have little, and possibly no contact with the first and second surfaces of the respective first and second tensioning shafts. In embodiments of the invention where the means for reducing the tension is provided by altering the tension applied to the net wrapping material by the tensioning system, it will be appreciated that the carrier members would be held in the selected position and in the reduced tension position by the hydraulic ram, stepper motor or the hydraulic rotary motor, or by any other suitable means which would allow the carrier arms to be readily moved between the two positions.

Additionally, it is envisaged that in some embodiments of the invention the secondary feed roller may be provided to act as the tensioning system for applying the desired tension to the net wrapping material, and in which case, it is envisaged that the secondary feed roller would be braked by a suitable braking means for applying a suitable variable braking force to the surface of the roll of the net wrapping material in order to apply the desired tension to the net wrapping material. The braking means of the secondary feed roller would be adjustable to reduce the tension in the net wrapping material while the primary feed roller is operating in the active mode to feed the net wrapping material into the bale chamber.

While first, second and third intermediate non-rotatable shafts have been described, in some embodiments of the invention some or all of the intermediate non-rotatable shafts may be omitted, and in some cases more than three intermediate shafts may be provided.

While it is desirable that the secondary feed roller be driven so that the linear speed of the net wrapping material fed from the roll is fed at a linear speed by the secondary feed roller which is approximately 3% greater than the linear speed at which the net wrapping material is fed by the primary feed roller when operating in the active mode, in some embodiments of the invention this may not be necessary, and in some embodiments the speed differential may be greater or less than 3%, and in general, the amount by which the linear speed at which the net wrapping material 26 is fed from the roll of net wrapping material is greater than the linear speed at which the net wrapping material is fed by the primary feed roller 30 and the pinch roller 31 will lie in the range of 1% to 5%, and preferably, will lie in the range of 2% to 4%, although it will be appreciated that the percentage value may be greater than 5% or less than 1 %.

While the baler has been described as comprising a fixed chamber roller baler, it is envisaged that the baler may comprise a variable chamber roller baler. It is also envisaged that the baler may comprise a belt baler or a baler comprising a combination of belts and bale rotating rollers.

While the binding material for circumferentially binding the bale in the bale chamber has been described as comprising net wrapping material, it will be appreciated that any other suitable wrapping or binding material may be used, for example, the binding material may comprise sheet film plastic material, or any other suitable material.

## Claims

1. A feeding system for feeding binding material (26) from a roll (25) thereof into a pressing means (15) of a baler (1) for circumferentially binding a formed bale therein, the feeding system comprising a primary feeding means (30, 31) selectively operable in an active mode to feed binding material (26) from a roll (25) thereof into the pressing means (15) to circumferentially bind the bale in the pressing means (15) and a passive mode during which the binding material may be freely drawn through the primary feeding means (30, 31), **characterised in that** the feeding system further comprises a tensioning means (50) for tensioning the binding material (26), and a tension reducing means (64) for reducing the tension in the binding material (26) while the primary feeding means (30, 31) is operating in the active mode.

2. A feeding system as claimed in Claim 1 **characterised in that** the tensioning means (50) is located between the primary feeding means (30, 31) and the roll (25) of binding material (26).

3. A feeding system as claimed in Claim 1 or 2 **characterised in that** the tensioning means (50) is adapted for adjusting the tension applied to the binding material (26).

4. A feeding system as claimed in any preceding claim **characterised in that** the tensioning means (50) comprises a first tensioning element (51) and a second tensioning element (53), the first tensioning element (51) defining a first surface (52) over which the binding material (26) is passed from the roll (25) of binding material to the second tensioning element (53), the second tensioning element (53) defining a second surface (54) over which the binding material (26) is passed from the first tensioning element (51) to the primary feeding means (30, 31), the first and second tensioning elements (51, 53) being located relative to each other to determine the angular distances around which the binding material (26) engages the respective first and second surfaces (52, 54) thereof.

5. A feeding system as claimed in Claim 4 **characterised in that** the first and second tensioning elements (51, 53) are spaced apart from each other.

6. A feeding system as claimed in Claim 4 or 5 **characterised in that** one of the first and second tensioning elements (51, 53) is moveable relative to the other one thereof for varying the tension applied to the binding material (26) by the tensioning means (50).

7. A feeding system as claimed in any of Claims 4 to 6 **characterised in that** one of the first and second tensioning elements (51, 53) is carried on a carrier member (55), the carrier member (55) being pivotally mounted about a pivot axis (57).

8. A feeding system as claimed in any of Claims 4 to 7 **characterised in that** the first and second tensioning elements (51, 53) comprise respective non-rotatably mounted first and second parallel shafts (51, 53) of at least partly circular transverse cross-section defining the corresponding first and second surfaces (52, 54).

9. A feeding system as claimed in Claim 8 **characterised in that** the first and second shafts (51, 53) of the first and second tensioning elements (51, 53) comprise respective shafts (51, 53) of substantially circular transverse cross-section.

10. A feeding system as claimed in any preceding claim **characterised in that** the tension reducing means (64) comprises a secondary feeding means (64) for feeding binding material (26) to the tensioning means (50) at a linear speed greater than the linear speed at which the binding material (26) is fed by the primary feeding means (30, 31) operating in the active mode to reduce the tension being applied to the binding material (26) by the tensioning means (50).

11. A feeding system as claimed in any preceding claim **characterised in that** the secondary feeding means (64) is cooperable with the roll (25) of the binding material (26) to rotate the roll (25) to feed the binding material (26) from the roll (25) thereof.

12. A feeding system as claimed in any preceding claim **characterised in that** a primary drive transmission (35) is provided for driving the primary feeding means (30, 31) and the secondary feeding means (64).

13. A baler comprising a pressing means (15) for rotating, pressing and forming material into a round bale, **characterised in that** the baler (1) comprises a feeding system (23) as claimed in any preceding claim.

14. A baler as claimed in Claim 13 **characterised in that** the baler comprises a fixed chamber baler (1).

15. A method for feeding binding material (26) from a roll (25) thereof into a pressing means (15) of a baler (1) wherein the pressing means (15) is configured to rotate, press and form material into a round bale, the method comprising providing a primary feeding means (30, 31) selectively operable in an active mode to feed binding material (26) from the roll (25) thereof into the pressing means (15) to circumferentially bind the bale in the pressing means (15), and a passive mode during which the binding material (26) may be drawn through the primary feeding means (30, 31), **characterised in that** a tensioning means (50) is provided for tensioning the binding material (26), a tension reducing means (64) is provided for reducing the tension applied to the binding material (26) by the tensioning means (50), initially operating the primary feeding means (30, 31) in the active mode to feed the binding material (26) from the roll (25) thereof into the pressing means (15) until the binding material (25) engages the rotating bale in the pressing means (15), and operating the tension reducing means (64) to reduce the tension applied to the binding material (26) by the tensioning means (50) while the primary feeding means (30, 31) is operating in the active mode.
